# EUROPÄISCHE PATENTSCHRIFT

(11) **EP 2 276 656 B1**
(45) Veröffentlichungstag und Bekanntmachung des Hinweises auf die Patenterteilung: **04.05.2016**
(21) Anmeldenummer: 09712349.1
(22) Anmeldetag: 05.02.2009
(51) Int. Cl.: B60T 17/08, B60T 17/16

(54) **BREMSZYLINDER FÜR DRUCKLUFTBETÄTIGTE FAHRZEUGBREMSEN**
BRAKE CYLINDER FOR COMPRESSED AIR OPERATED VEHICLE DISK BRAKES
CYLINDRE DE FREIN POUR DES FREINS ACTIONNÉS PAR AIR COMPRIMÉ DE VÉHICULES

(30) Priorität: 22.02.2008 DE 102008010569
(43) Veröffentlichungstag der Anmeldung: 26.01.2011
(73) Patentinhaber: KNORR-BREMSE Systeme für Nutzfahrzeuge GmbH, 80809 München (DE)
(72) Erfinder: IRASCHKO, Johann, 85201 Schweitenkirchen (DE)
(74) Vertreter: Mattusch, Gundula
(86) Internationale Anmeldenummer: PCT/EP2009/000803
(87) Internationale Veröffentlichungsnummer: WO 2009/103431

(56) Entgegenhaltungen:
- US-A- 3 260 168
- US-A- 3 282 169
- US-A1- 2006 131 116

## Beschreibung

Die Erfindung betrifft einen Bremszylinder für druckluftbetätigte Fahrzeugbremsen insbesondere für Bremsen von Nutzfahrzeugen nach dem Oberbegriff des Anspruchs 1.

Zur Erzeugung der notwendigen großen Bremskräfte sind Nutzfahrzeuge mit druckluftbetätigten Bremsen ausgerüstet. Die sogenannte Betriebsbremse wird dabei mit Druckluftzylindern, vorzugsweise in Form von Membranzylindern betätigt. Die Feststellbremse hingegen kann nicht mit einem Druckluftzylinder betätigt werden, da die Feststellbremsen nur mechanisch wirken dürfen, denn nur so ist eine konstante Bremskraft über einen praktisch unbegrenzten Zeitraum gewährleistet. Bei mit Druckluft beaufschlagten Bremsen könnte es durch Leckagen zu einem Abfall der Bremskraft kommen.

Derartige Bremszylinder mit Druckluftzylindern in Form von Membranzylindern sind aus der US-A-3260168, der US-A-3282 169 und der US 2006/131116 bekannt.

Aus diesem Grunde sind die Bremsen von Nutzfahrzeugen mit sogenannten Federspeicherzylindern ausgerüstet. Die Bremsbetätigungskraft wird hierbei über eine gespannte Feder erzeugt. Damit ist der Anforderung einer mechanisch wirkenden Feststellbremse genüge getan. Da diese Federspeicherzylinder in der Regel über sehr hohe Kräfte verfügen, ist es nicht mehr möglich, dass die Bremse manuell gelöst wird. Dazu sind verschiedene Lösungen vorgesehen. So ist beispielsweise der Federspeicherzylinder mit einem Lösekolben ausgerüstet. Mit diesem Kolben ist es möglich, bei Einleitung von Druckluft die Feder so weit zusammenzudrücken, bis die Bremse gelöst ist. Ferner ist es auch möglich, die Feststellbremse mittels einer Spindel zu lösen, die von außen betätigt wird.

Die Feststellbremse wird nur an einer Achse eines Fahrzeugs benötigt, im Regelfall ist das die Hinterachse. Da die Einbauräume begrenzt sind, sind die Bremsen mit einer Feststellbremse mit sogenannten Kombizylindern ausgerüstet. Ein solcher Zylinder besteht praktisch aus zwei verschiedenen Zylinderarten, nämlich einem Federspeicherzylinder für die Feststellbremse und einem Druckluftzylinder, vorzugsweise einem Membranzylinder, für die Betriebsbremse.

Auch bei dieser Bauform wird doch ein relativ großer Einbauraum benötigt. Häufig sind die Nutzfahrzeuge mit aufwendigen Fahrwerksystemen ausgerüstet, wie z.B. Einzelradaufhängungen, Leichtbauachsen und dergleichen, wodurch der Einbauraum limitiert ist.

Man ist daher im Nutzfahrzeugbau bestrebt, Bauformen und Wirkungsweisen zu finden, um die Einbauräume für die Feststellbremszylinder zu minimieren.

Es ist deshalb ein sogenannter Kompaktkombizylinder vorgeschlagen worden, bei dem die Funktion des Feststellbremszylinders in den Betriebsbremszylinder integriert ist. Die Federspeicherfeder wird hierbei nicht mehr über einen separaten Federspeicherkolben betätigt, sondern über den Kolben des Betriebsbremszylinders. Um die Feststellbremse zu lösen, wird für eine kurze Zeitspanne der Betriebsbremskolben mittels Druckluft beaufschlagt, wobei jedoch eine spezielle Ansteuerung notwendig ist.

Der Erfindung liegt die Aufgabe zugrunde, einen Bremszylinder für Fahrzeugbremsen der eingangs näher beschriebenen Art so zu gestalten, dass in konstruktiv einfacher Weise der benötigte Einbauraum für eine solche Fahrzeugbremse minimiert ist.

Die gestellte Aufgabe wird dadurch gelöst, dass der Federspeicherkolben im für Betriebsbremsungen mit Druck zu beaufschlagenden Primärraum angeordnet ist, und dass der Federspeicherkolben zwischen dem Betriebsbremskolben und der die Druckluftanschlüsse aufweisenden Stirnwand des Bremszylindergehäuses angeordnet ist.

Der erfindungsgemäße Bremszylinder ist als äußerst kompakt anzusehen.

Außerdem wird der Betriebsbremskolben nicht mehr durch das Gewicht der Federspeicherfeder belastet.

Der Federspeicherkolben und der Betriebsbremskolben arbeiten unabhängig voneinander, so dass das Lösen der Federspeicherfeder beispielsweise durch eine von außerhalb des Bremszylinders zugängliche Lösespindel erfolgen kann.

Darüber hinaus ist noch vorteilhaft, dass die Beanspruchung des Betriebsbremskolbens sowie der Führung dieses Betriebsbremskolbens bei einer Belastung, beispielsweise durch Rütteln, verringert ist.

Es ist in bevorzugter Ausgestaltung vorgesehen, dass die Kolbenrückstellfeder an der der Federspeicher abgewandten Seite des Betriebsbremskolbens angeordnet ist.

In der Lösestellung der Bremse steht der Federspeicherkolben in einem geringen Abstand zu der die Druckluftanschlüsse aufweisenden Stirnwand. Dieser Abstand ergibt sich durch die zusammengefahrene Federspeicherfeder. Außerdem liegt der Betriebsbremskolben an dem Federspeicherkolben an oder er steht in einem geringen Abstand dazu.

Wird ein Bremsvorgang ausgelöst, verfährt der Betriebsbremskolben in Richtung zu der gegenüberliegenden Stirnwand, d.h., der Abstand zwischen dem Federspeicherkolben und dem Betriebsbremskolben vergrößert sich. Wird jedoch die Feststellbremse betätigt, wird der Druck im Druckraum des Bremszylinders verringert oder vollständig abgebaut, so dass die Federspeicherfeder sich entspannen kann und die Bremse festsetzt. In dieser Stellung liegen der Federspeicherkolben und der Betriebsbremskolben wiederum aneinander. Durch diese Wirkungsweise des Federspeicherkolbens und des Betriebsbremskolbens wird die kompakte Bauform erreicht.

Der Federspeicherkolben kann unterschiedlich gestaltet sein. So ist in einer ersten Ausführung vorgesehen, dass der Ringflansch des Federspeicherkolbens dem Innendurchmesser des Bremszylindergehäuses entspricht. Dadurch wird gleichzeitig eine Führung durch die Wandung des Bremszylindergehäuses geschaffen. Die Beaufschlagung des Betriebsbremskolbens erfolgt entweder mit einer flexiblen Druckluftleitung oder mit einem zentral angeordneten Belüftungsrohr.

Es ist zur Druckbeaufschlagung des Federspeicherkolbens vorgesehen, dass dessen Ringflansch an seiner Umfangsfläche eine umlaufende Dichtung aufweist. Dadurch kann bei Druckbeaufschlagung des Federspeicherkolbens keine Luft entweichen.

In einer zweiten Ausführung ist vorgesehen, dass der Außendurchmesser des Ringflansches des Federspeicherkolbens geringer ist als der Innendurchmesser des Bremszylindergehäuses. Wenn die Feststellbremse betätigt wird, verfährt der Federspeicherkolben zu der den Druckluftanschlüssen gegenüberliegenden Seite und nimmt dabei den Betriebsbremskolben mit. Der dem Federspeicherkolben abgewandt liegende Bereich des Bremszylinders wird dann entlüftet. Das Verhältnis des Außendurchmessers des Ringflansches des Federspeicherkolbens zum Innendurchmesser des Bremszylindergehäuses liegt im Bereich von zwei zu drei.

Es ist ferner vorzugsweise vorgesehen, dass die dem Federspeicherkolben zugewandte Fläche des Betriebsbremskolbens stufenförmig ausgebildet ist. Dabei verspringt eine äußere Ringfläche gegenüber der mittleren Fläche.

Es ist vorzugsweise vorgesehen, dass in die Umfangsfläche des Betriebsbremskolbens wenigstens eine Dichtung eingesetzt ist, vorzugsweise jedoch zwei Dichtungen, die noch durch einen Steg voneinander getrennt sind.

Anhand der beiliegenden Zeichnungen wird die Erfindung noch näher erläutert.

Es zeigen:
- Figur 1: den erfindungsgemäßen Bremszylinder in einer ersten Ausführungsform in Schnittdarstellung und
- Figur 2: den erfindungsgemäßen Bremszylinder in einer zweiten Ausführungsform in Schnittdarstellung.
Der in den Figuren 1 und 2 dargestellte Bremszylinder 1 weist ein topfförmiges Bremszylindergehäuse 2 auf, in dem ein Federspeicherkolben 3 und ein Betriebsbremskolben 4 jeweils verschiebbar geführt sind.

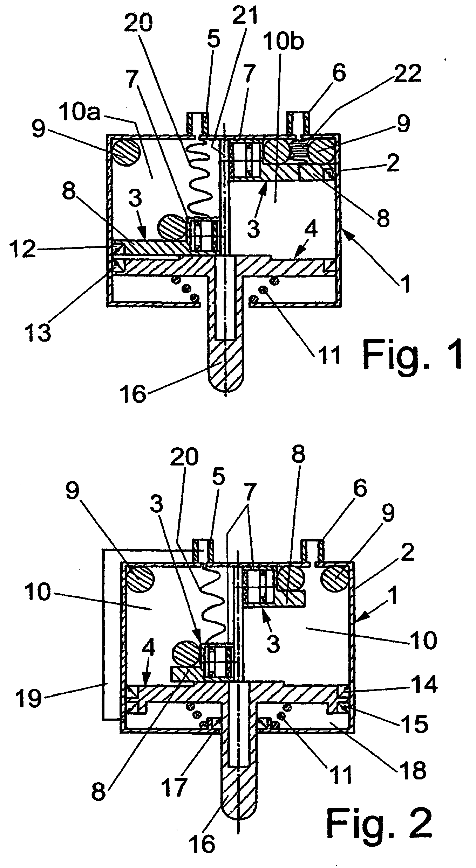

Der Betriebsbremskolben 4 unterteilt den Innenraum des Bremszylindergehäuses in einen Primärraum 10 und einen Sekundärraum 18. Der Federspeicherkolben 3 ist im Primärraum angeordnet und unterteilt diesen in Fig. 1 wiederum in einen ersten Teilraum 10a und einen zweiten Teilraum 10b zwischen dem Federspeicherkolben 3 und dem Betriebsbremskolben 4.

Der Betriebsbremskolben ist mit einer Kolbenstange 16 versehen, die aus dem Bremszylindergehäuse 2 herausragt.

Die Darstellungen gemäß den Figuren 1 und 2 zeigen, dass an der vom Betätigungsstößel 16 abgewandten Seite des Bremszylindergehäuses 2 zwei Druckluftanschlüsse 5, 6 ausgebildet sind.

Der eine Druckluftanschluss 5 ist über eine Pneumatikleitung 20 mit einer Sperrvorrichtung 7 verbunden und dient zum pneumatischen Betätigen (Lösen und Sperren) der rein schematisch angedeuteten Sperrvorrichtung 7, welche dazu ausgelegt ist, den Federspeicherkolben in einer axialen Position auf einer diesen durchsetzenden Stange oder Spindel 21 zu arretieren oder diese Arretierung aufzuheben.

Der andere Druckluftanschluss 6 dient dagegen zur Einleitung von Betriebsbremsungen und zum Zurückbewegen des Feststellbremskolbens nach Feststellbremsungen. Er ist über eine weitere Pneumatikleitung 22 mit dem zweiten Teilraum des Primärraumes 10 verbunden.

Auf den Federspeicherkolben 3 wirkt eine Federspeicherfeder 9 ein, die vorzugsweise konisch gestaltet ist und im ersten Teilraum 10a zwischen dem Federspeicherkolben 3 und der Wand mit den Druckluftanschlüssen 5, 6 des Bremszylindergehäuses angeordnet ist.

Der Betriebsbremskolben 4 befindet sich an der von den Druckluftanschlüssen 5, 6 abgewandten Seite des Federspeicherkolbens 3.

Auf die dem Federspeicherkolben 3 abgewandte Fläche des Betriebsbremskolbens 4 wirkt eine Kolbenrückstellfeder 11, die den Betriebsbremskolben 4 nach Betriebsbremsungen in eine nicht dargestellte, obere Endstellung verfährt.

Bei der Ausführung gemäß der Figur 1 ist der Außendurchmesser des Ringflansches 8 des Federspeicherkolbens 3 an den Innendurchmesser des Bremszylindergehäuses 2 angepasst.

In eine äußere Umfangsnut ist eine Dichtung 12 eingesetzt. Bei der Ausführung nach der Figur 1 ist in eine Umfangsnut des Betriebsbremskolbens 4 eine weitere Dichtung 13 eingesetzt.

In den Figuren 1 und 2 ist der Federspeicherkolben 3 in der rechten Darstellung in der Lösestellung der Fahrzeugbremse dargestellt, während in der linken Darstellung die Feststellbremse aktiviert ist.

Zum Einleiten einer Betriebsbremsung wird der Teilraum 10b zwischen dem Betriebsbremskolben 4 und dem Feststellbremskolben 3 über den Druckluftanschluss 6 mit Druckluft beaufschlagt, so dass der Betriebsbremskolben bewegt und der Stößel 16 aus dem Bremszylindergehäuse 2 gefahren wird. Der Feststellbremskolben 3 verbleibt in der Ausgangsstellung (rechte Seite der Fig. 1).

Der Betriebsbremskolben ist dadurch nicht durch das Gewicht der Federspeicherfeder 9 belastet. Der Sperrmechanismus kann sowohl nach Art der Fig. 1 am Federspeicherkolben 4 als auch am Zylindergehäuse 2 angeordnet sein.

Zum Lösen der Betriebsbremsung wird der Druck im Teilraum 10b gesenkt bzw. dieser Teilraum 10b wird entlüftet, so dass die Kolbenrückstellfeder 11 den Betriebsbremskolben 4 in die Ausgangsstellung (hier nicht dargestellt) zurückbewegt.

Bei einer Feststellbremsung wird der Sperrmechanismus 7 für den Federspeicherkolben 3 über den Druckluftanschluss 5 gelöst, so dass sich die Federspeicherfeder 9 entspannen und hierdurch den Federspeicherkolben (ggf. mit dem Betriebsbremskolben) bewegen kann, wodurch wiederum der Stößel 16 ausgefahren wird, der auf eine Zuspannvorrichtung einer Scheiben- oder Trommelbremse einwirkt.

Zum Lösen der Feststellbremsung wird der Teilraum 10b zwischen dem Federspeicherkolben 4 und dem Feststellbremskolben 3 mit Druckluft beaufschlagt, wodurch der Feststellbremskolben 4 von der in Fig. 1 linken Stellung von Bremsbetriebskolben 3 weg in die in Fig. 1 rechte Stellung bewegt wird. Damit lässt sich die Feststellbremse auf einfache Weise lösen.

Die gewählte Anordnung des Federspeicherkolbens bietet zahlreiche Vorteile.

Die Federspeicherfeder 9 befindet sich damit in einem geschützten und abgeschlossenen Raum, dem Primärraum 10, und ist damit sicher gegen Korrosion geschützt

Die Federspeicherfeder 9 wird durch einen eigenen, vom Betriebsbremskolben 4 unabhängigen Federspeicherkolben 3 betätigt.

Das manuelle Lösen der Federspeicherfeder 9 kann dabei einfach durch eine von außen zugängliche Lösespindel erfolgen (hier nicht im Detail dargestellt).

Da der Betriebsbremskolben 4 ferner nicht durch das Gewicht der Speicherfeder 9 belastet wird, werden die Beanspruchung des Betriebsbremskolbens 4 und der Kolbenführung bei Rüttelbelastungen herabgesetzt.

Die Ausführung des Bremszylinders 1 gemäß der Figur 2 unterscheidet sich von der Ausführung gemäß der Figur 1 zunächst dadurch, dass der Ringflansch 8 einen Außendurchmesser aufweist, der geringer ist als der Innendurchmesser des Bremszylindergehäuses 2. Das Durchmesserverhältnis des Außendurchmessers des Ringflansches 8 zum Innendurchmesser des Bremszylindergehäuses 2 liegt bei hierbei ca. zwei zu drei. Der Primärraum 10 wird daher nicht zwei Teilräume unterteilt. Der Druckluftanschluss 6 mündet dabei direkt in den Primärraum 10.

Bei der Ausführung gemäß der Figur 2 sind in die Umfangsfläche des Betriebsbremskolbens 4 daher ferner zwei Dichtungen 14, 15 eingesetzt, die durch einen Steg voneinander getrennt sind.

Der Betriebsbremskolben 4 kann hier beidseits - auch von der Seite des vom Primärraum 10 abgewandten Sekundärraums 18 her mit Druckluft beaufschlagt werden, wozu eine Pneumatikleitung 19 vom der Druckluftanschluss 5 in den Sekundärraum 18 mündet. Eine weitere Pneumatikleitung 20 verbindet den Druckluftanschluss wiederum mit der Sperreinrichtung 7. Der Sekundärraum 18 ist mit einer Dichtung 17 an der Kolbenstange 16 gegen die Umgebung abgedichtet und kann daher mit Druck beaufschlagt werden.

Eine Betriebbremsung wird wie zu Fig. 1 beschrieben durch ein Belüften des Primärraums eingeleitet.

Zum Einlegend er Federspeicherbremse wird jetzt oder auch ohne vorhergehende Betriebsbremsung der Sperrmechanismus 7 für den Federspeicherkolben gelöst, so dass sich die Federspeicherfeder entspannen kann.

Zum Lösen wird der Sekundärraum 18 belüftet und der Primärraum entlüftet, so dass der Betriebsbremskolben 4 mit dem Feststellbremskolben 3 in die Ausgangsstellung zurückbewegt wird. Dabei wird die Federspeicherfeder 9 komprimiert.

Zusätzlich zu den in Fig. 1 diskutierten Vorteilen bietet diese Ausführungsform den Vorteil, dass die Belüftung des Betriebsbremskolbens 4 direkt ohne eine Pneumatik- bzw. Druckluftleitung in den Primärraum 10 erfolgen kann. Zusätzlich wird beim Lösen der Federspeicherbremse keine Kraft auf die Bremse ausgeübt, so dass ein Lösen während der Fahrt möglich ist. Bei einer entsprechenden Ansteuerung kann die Federkraft zunehmend und abnehmend dosiert werden.

### Bezugszeichen

- Bremszylinder: 1
- Bremszylindergehäuse: 2
- Federspeicherkolben: 3
- Betriebsbremskolben: 4
- Druckluftanschluss: 5
- Druckluftanschluss: 6
- Sperrmechanismus: 7
- Ringflansch: 8
- Primärraum: 10
- erster Teilraum: 10a
- zweiter Teilraum: 10b
- Kolbenrückstellfeder: 11
- Dichtung: 12
- Dichtung: 13
- Dichtungen: 14, 15
- Stößel: 16
- Dichtung: 17
- Sekundärraum: 18
- Pneumatikleitung: 19
- Pneumatikleitung: 20
- Stange: 21
- Pneumatikleitung: 22

## Patentansprüche

1. Bremszylinder (1) für druckluftbetätigte Fahrzeugbremsen, insbesondere für Bremsen von Nutzfahrzeugen mit
a) einem Bremszylindergehäuse (2), an dem Druckluftanschlüsse (5, 6) vorgesehen sind,
b) wobei innerhalb des Bremszylindergehäuses (2) ein Betriebsbremskolben (4) beweglich geführt ist, welcher den Bremszylinder in einen Primärraum (10) und einen Sekundärraum (18) unterteilt,
c) wobei innerhalb des Bremszylindergehäuses (2) ferner ein Federspeicherkolben (3) beweglich geführt sind, wobei
d) wobei der Federspeicherkolben (3) durch eine Federspeicherfeder (9) belastet ist,
e) wobei der Federspeicherkolben (3) in der Lösestellung der Fahrzeugbremse arretierbar ist,
**dadurch gekennzeichnet, dass**
f) der Federspeicherkolben (3) im für Betriebsbremsungen mit Druck beaufschlagbaren Primärraum (10) angeordnet ist, und dass
g) der Federspeicherkolben (3) zwischen dem Betriebsbremskolben (4) und der die Druckluftanschlüsse (5, 6) aufweisenden Stirnwand des Bremszylindergehäuses (2) angeordnet ist.

2. Bremszylinder nach Anspruch 1, **dadurch gekennzeichnet, dass** eine Kolbenrückstellfeder (11) an der dem Federspeicherkolben (3) abgewandten Seite des Betriebsbremskolbens (4) angeordnet ist.

3. Bremszylinder nach Anspruch 1 oder 2, **dadurch gekennzeichnet, dass** der Federspeicherkolben (9) den Primärraum in zwei Teilräume (10a, 10b) unterteilt.

4. Bremszylinder nach einem oder mehreren der vorstehenden Ansprüche, **dadurch gekennzeichnet, dass** ein Ringflansch (8) des Federspeicherkolbens (3) dem Innendurchmesser des Bremszylindergehäuses (2) entspricht.

5. Bremszylinder nach einem oder mehreren der vorstehenden Ansprüche, **dadurch gekennzeichnet, dass** der Ringflansch (8) des Federspeicherkolbens (3) an seiner Umfangsfläche eine umlaufende Dichtung (12) aufweist.

6. Bremszylinder nach einem oder mehreren der vorstehenden Ansprüche, **dadurch gekennzeichnet, dass** der Außendurchmesser des Ringflansches (8) des Federspeicherkolbens (3) kleiner ist als der Innendurchmesser des Bremszylindergehäuses (2).

7. Bremszylinder nach einem oder mehreren der vorstehenden Ansprüche, **dadurch gekennzeichnet, dass** in die Umfangsfläche des Betriebsbremskolbens (4) eine Dichtung eingesetzt ist.

8. Bremszylinder nach einem oder mehreren der vorstehenden Ansprüche, **dadurch gekennzeichnet, dass** in die Umfangsfläche des Betriebsbremskolbens (4) wenigstens zwei durch einen Steg beabstandete Dichtungen (14, 15) eingesetzt sind.

9. Bremszylinder nach einem oder mehreren der vorstehenden Ansprüche, **dadurch gekennzeichnet, dass** der Sekundärraum (18) mit einer Dichtung (17) an einer Kolbenstange (16) gegen die Umgebung abgedichtet ist.

## Claims

1. Brake cylinder (1) for compressed air operated vehicle brakes, in particular for brakes of commercial vehicles, with
a) a brake cylinder housing (2) on which compressed air connections (5, 6) are provided,
b) wherein a service brake piston (4) is guided movably within the brake cylinder housing (2) and divides the brake cylinder into a primary chamber (10) and a secondary chamber (18),
c) wherein a spring brake piston (3) is furthermore guided movably within the brake cylinder housing (2),
d) wherein the spring brake piston (3) is loaded by an accumulator spring (9),
e) wherein the spring brake piston (3) is lockable in the release position of the vehicle brake,
**characterised in that**
f) the spring brake piston (3) is located in the primary chamber (10), which can be pressurised for service brake operations, and **in that**
g) the spring brake piston (3) is located between the service brake piston (4) and that end wall of the brake cylinder housing (2) which has the compressed air connections (5, 6).

2. Brake cylinder according to claim 1, **characterised in that** a piston return spring (11) is located on that side of the service brake piston (4) which faces away from the spring brake piston (3).

3. Brake cylinder according to claim 1 or 2, **characterised in that** the spring brake piston (9) divides the primary chamber into two sub-chambers (10a, 10b).

4. Brake cylinder according to one or more of the preceding claims, **characterised in that** an annular flange (8) of the spring brake piston (3) corresponds to the inside diameter of the brake cylinder housing (2).

5. Brake cylinder according to one or more of the preceding claims, **characterised in that** the annular flange (8) of the spring brake piston (3) has an encircling seal (12) on its circumferential surface.

6. Brake cylinder according to one or more of the preceding claims, **characterised in that** the outside diameter of the annular flange (8) of the spring brake piston (3) is smaller than the inside diameter of the brake cylinder housing (2).

7. Brake cylinder according to one or more of the preceding claims, **characterised in that** a seal is inserted into the circumferential surface of the service brake piston (4).

8. Brake cylinder according to one or more of the preceding claims, **characterised in that** at least two seals (14, 15) spaced apart by a web are inserted into the circumferential surface of the service brake piston (4).

9. Brake cylinder according to one or more of the preceding claims, **characterised in that** the secondary chamber (18) is sealed off from the surroundings by a seal (17) on a piston rod (16).

## Revendications

1. Cylindre (1) de frein pour des freins de véhicules actionnés par air comprimé, notamment pour des freins de véhicules utilitaires, comprenant
a) une enveloppe (2) de cylindre de frein, sur laquelle sont prévus des raccords (5, 6) pour de l'air comprimé,
b) dans lequel, dans l'enveloppe (2) de cylindre de frein, un piston (4) de frein de service est guidé de manière mobile et subdivise le cylindre de frein en une chambre (10) primaire et en une chambre (18) secondaire,
c) dans lequel, dans l'enveloppe (2) de cylindre de frein, en outre, un piston (3) à ressort accumulateur est guidé de manière mobile,
d) dans lequel le piston (3) à ressort accumulateur est soumis à l'action d'un ressort (9) accumulateur,
e) dans lequel le piston (3) à ressort accumulateur peut être arrêté dans la position de desserrage du frein de véhicule,
**caractérisé en ce que**
f) le piston (3) à ressort accumulateur est disposé dans la chambre (10) primaire pouvant être alimentée en pression pour des freinages de service et **en ce que**
g) le piston (3) à ressort accumulateur est monté entre le piston (4) de frein de service et la paroi frontale, ayant les raccords (5, 6) pour l'air comprimé, de l'enveloppe (2) du cylindre de frein.

2. Cylindre de frein suivant la revendication 1, **caractérisé en ce qu'**un ressort (11) de rappel du piston est disposé du côté, éloigné du piston (3) à ressort accumulateur, du piston (4) de frein de service.

3. Cylindre de frein suivant la revendication 1 ou 2, **caractérisé en ce que** le piston (9) à ressort accumulateur subdivise la chambre primaire en deux sous-chambres (10a, 10b).

4. Cylindre de frein suivant l'une ou plusieurs des revendications précédentes, **caractérisé en ce qu'**un collet (8) annulaire du piston (3) à ressort accumulateur correspond au diamètre intérieur de l'enveloppe (2) du cylindre de frein.

5. Cylindre de frein suivant l'une ou plusieurs des revendications précédentes, **caractérisé en ce que** le collet (8) annulaire du piston (3) à ressort accumulateur a une garniture (12) d'étanchéité faisant le tour sur sa surface périphérique.

6. Cylindre de frein suivant l'une ou plusieurs des revendications précédentes, **caractérisé en ce que** le diamètre extérieur du collet (8) annulaire du piston (3) à ressort accumulateur est plus petit que le diamètre intérieur de l'enveloppe (2) du cylindre de frein.

7. Cylindre de frein suivant l'une ou plusieurs des revendications précédentes, **caractérisé en ce qu'**une garniture d'étanchéité est insérée dans la surface périphérique du piston (4) de frein de service.

8. Cylindre de frein suivant l'une ou plusieurs des revendications précédentes, **caractérisé en ce qu'**au moins deux garnitures (14, 15) d'étanchéité, maintenues à distance par une entretoise, sont insérées dans la surface périphérique du piston (4) de frein de service.

9. Cylindre de frein suivant l'une ou plusieurs des revendications précédentes, **caractérisé en ce que** la chambre (18) secondaire est rendue étanche vis-à-vis de l'atmosphère environnante par une garniture (17) d'étanchéité sur sa tige (16) de piston.
